## Europäisches Patentamt
## European Patent Office
## Office européen des brevets

(19)

(11) Veröffentlichungsnummer. **0 038 772**
**B1**

(12) # EUROPÄISCHE PATENTSCHRIFT

(45) Veröffentlichungstag der Patentschrift:
27.06.84

(21) Anmeldenummer: 81730038.7

(22) Anmeldetag: 19.03.81

(51) Int. Cl.³: **F 16 H  37/04,** F 16 H  57/08 //
**F16H1/46, B60K17/04**

(54) **Drehfeste Verbindung eines axial beweglichen Planetensteges mit einem Zapfen, insbesondere dem Tragzapfen eines hydrostatischen Fahrgetriebes.**

(30) Priorität: **22.04.80  DE 3015818**

(43) Veröffentlichungstag der Anmeldung:
**28.10.81 Patentblatt 81/43**

(45) Bekanntmachung des Hinweises auf die Patenterteilung:
**27.06.84 Patentblatt 84/26**

(84) Benannte Vertragsstaaten:
**FR GB IT SE**

(56) Entgegenhaltungen:
**AT - A - 313 075
FR - A - 1 278 798
FR - A - 2 398 919
US - A - 1 915 014**

(73) Patentinhaber: **MANNESMANN Aktiengesellschaft,
Mannesmannufer 2, D-4000 Düsseldorf 1 (DE)**

(72) Erfinder: **Abraham, Uwe, Mittelstrasse 18,
D-4350 Recklinghausen (DE)**
Erfinder: **Jakubowski, Karl-Heinz, Tilsiter Strasse 22,
D-4620 Castrop-Rauxel (DE)**
Erfinder: **Köster, Wilhelm, Hagemer Kirchweg 11,
D-4354 Datteln (DE)**

(74) Vertreter: **Meissner, Peter E., Dipl.-Ing. et al,
Patentanwälte Dipl.-Ing. Peter E. Meissner Dipl.-Ing.
Hans-Joachim Presting Herbertstrasse 22,
D-1000 Berlin 33 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine drehfeste Verbindung eines axial beweglichen Planetensteges eines Planetengetriebes mit einem Zapfen, insbesondere dem Tragzapfen eines hydrostatischen Fahrgetriebes gemäß dem Oberbegriff des Patentanspruches 1.

Aus der US-A-1 915 014 ist eine drehfeste Verbindung zwischen einem hohlzylindrischen Teil mit gerader Innenverzahnung und einem hineingeschobenen zylindrischen Teil mit gerader Außenverzahnung bekannt, wobei die Verzahnungen ineinandergreifen. Einer der Teile weist im Bereich der Verzahnung eine Umfangsnut auf, deren Grund bis zum Grund der Verzahnung reicht. Eine Zahnscheibe ist derart in der Nut angeordnet, daß ihre Zähne etwa um eine halbe Zahnteilung versetzt zu den Zähnen der Verzahnung des betreffenden Teiles sind.

Aufgabe der Erfindung ist es, bei Anwendung einer derartigen Verbindung bei einem Planetengetriebe mit axial beweglichem Planetensteg, die Mittel zur axialen Festlegung des Planetensteges gegenüber dem Zapfen im Sinne einer vereinfachten Konstruktion und einer Vereinfachung der Montage weiterzuentwickeln. Auch ist es eine Aufgabe der Erfindung, den für die axialen Festlegungsmittel erforderlichen Bauraum so gering wie möglich zu halten.

Zur Lösung der Aufgabe wird vorgeschlagen, die drehfeste Verbindung im Sinne der Merkmale des Patentanspruches 1 zu gestalten. Auf Ausgestaltungen der Erfindung gemäß den Unteransprüchen wird verwiesen.

Durch die Erfindung wird die axiale Begrenzung der Beweglichkeit des Planetensteges in beide Richtungen durch ein einziges Element erreicht. Da dieses einzige Element, nämlich die Zahnscheibe gemäß Patentanspruch 2 außerdem der axialen Verspannung der Traglager des auf dem Zapfen gelagerten Planetengetriebes dienen kann, wird durch die Erfindung eine besonders Bauraum sparende Ausführung angeboten, die mehrere Funktionen gleichzeitig erfüllt.

Die Erfindung ist in den Figuren anhand eines Ausführungsbeispiels näher erläutert. Es zeigt

Fig. 1 ein zweistufiges hydrostatisches Fahrgetriebe,

Fig. 2 eine Einzelheit aus Fig. 1,

Fig. 3 einen Schnitt A-A durch Fig. 2,

Fig. 4 die Montageposition der Zahnscheibe.

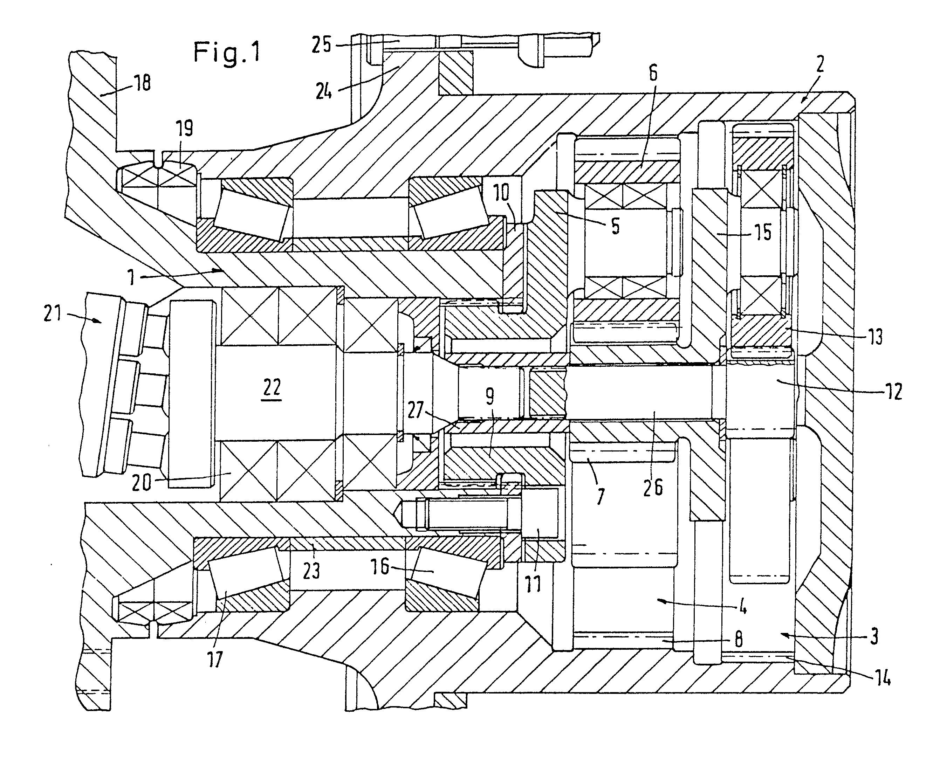

Das in Fig. 1 darstellte Fahrgetriebe zeigt eine Randnabe 2, die eine erste Planetenstufe 3 und eine zweite Planetenstufe 4 enthält.

Zur ersten Planetenstufe 3 gehören ein Sonnenrad 12, Planetenräder 13, ein Planetensteg 15 und ein Hohlrad 14, welches wie ein Hohlrad 8 der zweiten Planetenstufe 4 in die Radnabe 2 eingearbeitet ist.

Die zweite Planetenstufe 4 enthält ein Sonnenrad 7, Planetenräder 6 und einen Planetensteg 5, der über eine Hülse 9, mit der er einstückig ausgeführt ist, drehfest mit einem Zapfen 1 verbunden ist. Auf diesem Zapfen 1, der über einen Flansch 18 mit dem Fahrgestell eines Fahrzeuges verbunden sein kann, ist die Radnabe 2 mittels zweier Traglager 16 und 17 gelagert.

Im Inneren des hohlen Tragzapfens 1 liegt die Motorwelle 22 eines hydrostatischen Motors 21, wobei die Motorwelle 22 über mehrere Lager 20 im Zapfen 1 gehalten ist. Die Motorwelle 22 ist über eine Innenzahnhülse 27 mit einer Welle 26, auf der das Sonnenrad 12 der ersten Planetenstufe 3 sitzt, drehfest verbunden.

An der Radnabe 2 ist ein Flansch 24 mit Befestigungsschrauben 25 für ein Rad vorgesehen. Dichtungen 19 dienen der Abdichtung des Innenraumes.

Weiterhin liegt zwischen den beiden Traglagern 16 und 17 ein hülsenförmiges Distanzstück 23.

Zwischen dem Planetensteg 5 und dem Zapfen 1 ist eine Zahnscheibe 10 angeordnet und mittels gleichmäßig auf den Umfang verteilter Schrauben 11 an der Stirnseite des Zapfens befestigt.

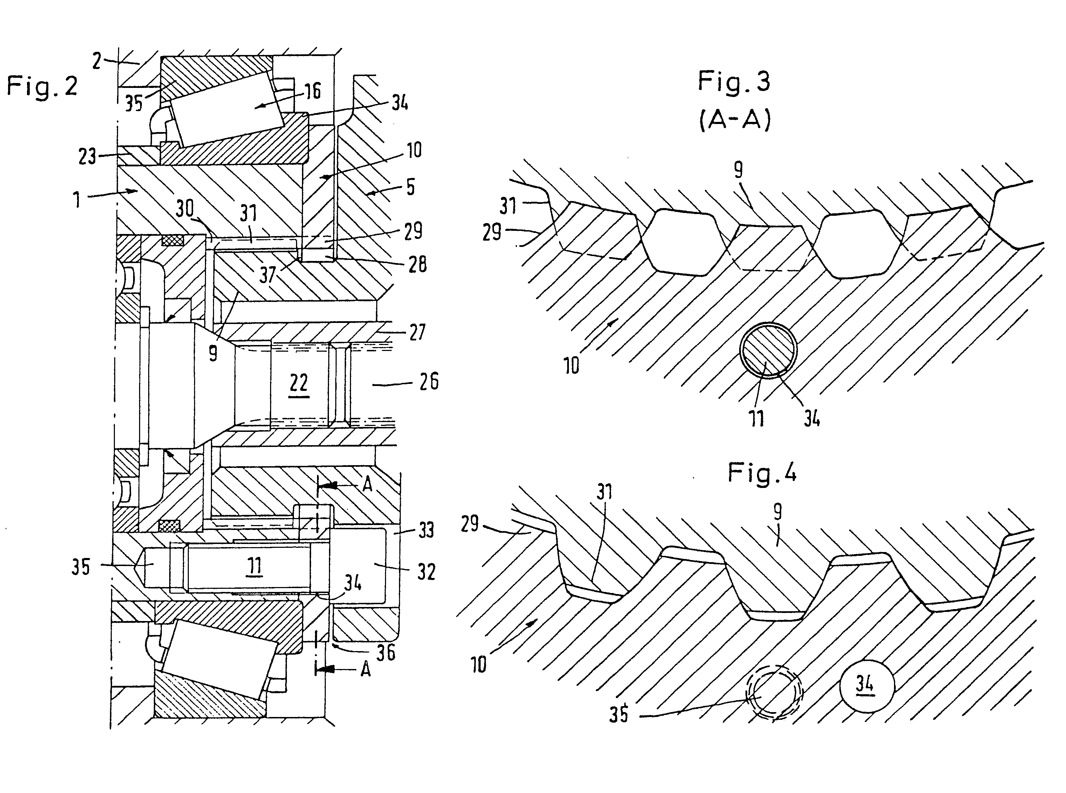

Diese Befestigung und die Ausbildung der Zahnscheibe 10 ist in Fig. 2 in vergrößertem Maßstab dargestellt. Diese zeigt, daß die Hülse 9, die eine außenliegende Verzahnung 31 aufweist, im unmittelbaren Anschluß an ihre Verzahnung 31 im Durchmesser unter Bildung einer einerseits teilweise durch die Stirnseite der Zähne der Verzahnung 31, andererseits durch den Planetensteg 5 begrenzten, über den Grund der Verzahnung 31 der Hülse 9 hinausgehenden Auskehlung 28 abgesetzt ist. Im axialen Bereich dieser Auskehlung liegt die Zahnscheibe 10. Sie ist dabei gegenüber der Verzahnung 31 der Hülse 9 und natürlich auch gegenüber der Verzahnung 30 des Zapfens 1 um eine halbe Zahnteilung versetzt angeordnet und verhindert so, daß sich die Verzahnung 31 der Hülse 9 über die Position der Zahnscheibe 10 hinaus bewegen kann. Die axiale Beweglichkeit des Steges 5 wird dabei bestimmt durch ein vorgegebenes Spiel, welches sich aus den in der Zeichnung erkennbaren axialen Bewegungsfreiheiten 36 und 37 in der Addition ergibt.

Fig. 2 zeigt darüber hinaus wie über die Zahnscheibe 10 die axiale Verspannung des Traglagers 16 erfolgt. Diese axiale Verspannung wird durch die Zahnscheibe 10 bewirkt, die mit ihrem über den Zapfen 1 hinausragenden Teil, der am Innenring 34 des Traglagers 16 anliegt, die nötige axiale Spannkraft erzeugt. Mit 35 ist der Außenring des Traglagers 16 bezeichnet. Ein Blick in Fig. 1 zeigt, daß über diese Verspannung und über das hülsenförmige Zwischenstück 23 auch die Verspannung des zweiten Traglagers 17 bewirkt ist.

Zur Montage der Zahnscheibe 10 wird diese zunächst in der in Fig. 4 dargestellten Verzahnungsposition mit ihrer Verzahnung 29 über die Verzahnung 31 der Hülse 9 geschoben, bis sie diese Verzahnung 31 wieder verläßt und am Planetensteg 5 anliegt. Nun kann die Zahnscheibe 10 um eine halbe Zahnteilung gedreht werden, worauf die Hülse 9 in die Verzahnung 30 des Zapfens 1 eingesteckt wird.

In der Montageposition nach Fig. 4 sind Bohrungen 34 in der Zahnscheibe 10 zur Bohrung 35 im Zapfen 1 und zur Bohrung 33 im Planetensteg 5 versetzt. Durch das Verdrehen um die halbe Zahnteilung kommen alle Bohrungen zur Deckung, so daß schließlich die in Fig. 3 gezeigte Position erreicht wird, die einen Schnitt nach der Linie A-A durch Fig. 2 darstellt. Dieser Schnitt zeigt die in die als Gewindebohrung ausgeführte Bohrung 35 eingeschraubte Schraube 11, deren Kopf 32 mit Spiel in der Bohrung 33 des Planetensteges 5 liegt.

## Patentansprüche

1. Drehfeste Verbindung eines axial beweglichen Planetensteges (5) eines Planetengetriebes (4) mit einem Zapfen (1), insbesondere dem Tragzapfen eines hydrostatischen Fahrgetriebes, wobei zur Übertragung eines über den Planetensteg (5) geleiteten Stützmomentes eine mit dem Planetensteg starr verbundene geradverzahnte Hülse (9) und eine entsprechende Verzahnung (30) am Zapfenende ineinandergesteckt sind und die axiale Beweglichkeit des Planetensteges (5) gegenüber dem Zapfen (1) in beiden Richtungen begrenzt ist, und wobei einer der Teile im Bereich der Verzahnung eine Auskehlung (28) aufweist, deren Grund mindestens bis zum Grund der Verzahnung reicht und in der Auskehlung (28) eine Zahnscheibe (10) derart angeordnet ist, daß ihre Zähne etwa um eine halbe Zahnteilung versetzt zu den Zähnen der Verzahnung des anderen Teiles sind, dadurch gekennzeichnet, daß die Auskehlung (28) in der Hülse (9) im unmittelbaren Anschluß an ihre Verzahnung (31) durch einen abgesetzten Durchmesser gebildet und einerseits teilweise durch die Stirnseite der Zähne der Hülsenverzahnung (31), andererseits durch eine Stirnfläche des Planetensteges (5) begrenzt ist, und daß die Zahnscheibe (10) am Stirnende des Zapfens lösbar befestigt ist.

2. Drehfeste Verbindung nach Anspruch 1, in einem Radantrieb mit einer das Planetengetriebe (4) enthaltenden Radnabe (2), die auf dem als hohlen Tragzapfen ausgebildeten Zapfen (1) gelagert und durch eine Axialverspannung der Traglager (16, 17) gegenüber dem Zapfen (1) axial festgelegt ist, und bei dem der Zapfen (1) mit einer Innenverzahnung (30) und die Hülse (9) mit einer Außenverzahnung (31) versehen sind, dadurch gekennzeichnet, daß die ringförmig ausgebildete Zahnscheibe (10) im Außendurchmesser größer ist als der Außendurchmesser des freien Endes des Zapfens (1) und der über den Zapfen (1) hinausragende Teil der Zahnscheibe (10) zapfenseitig an der Stirnseite des Innenringes (34) eines Traglager (16) anliegt.

3. Drehfeste Verbindung nach Anspruch 2, dadurch gekennzeichnet, daß der Planetensteg (5), die Zahnscheibe (10) und der Zapfen (1) mehrere auf den Umfang verteilte achsparallele, miteinander fluchtende Bohrungen (33, 34, 35) für Befestigungsschrauben (11) aufweisen, daß die Bohrungen (33) des Planetensteges (5) durchgehend sind und mit Spiel jeweils die Köpfe (32) der Schrauben (11) aufnehmen, die die Zahnscheibe (10) mit dem Zapfen (1) verspannen, und daß die Bohrungen (35) des Zapfens Gewindebohrungen sind.

## Claims

1. Connection, secure against rotation, of an axially movable planet cross-piece (5) of a planet gearing (4) with a pin (1), in particular the supporting pin of a hydrostatic travelling gear, in which to transfer a supporting moment conducted via the planet cross-piece (5) a straight-toothed sleeve (9) rigidly connected with the planet cross-piece and a corresponding toothing (30) on the pin end are fitted into each other and the axial mobility of the planet cross-piece (5) with respect to the pin (1) is limited in both directions, and in which one of the parts in the region of the toothing has a channel (28), the base of which at least reaches the base of the toothing and in the channel (28) a toothed disc (10) is arranged such that its teeth are staggered approximately by a half tooth pitch to the teeth of the toothing of the other part, characterized in that the channel (28) in the sleeve (9) in direct connection to its toothing (31) is formed by a recessed diameter and is limited on the one hand partially by the front face of the teeth of the sleeve toothing (31) and on the other hand by a front face of the planet cross-piece (5), and that the toothed disc (10) is detachably fastened on the front end of the pin.

2. Connection, secure against rotation, according to claim 1, in a wheel drive with a wheel hub (2) containing the planet gearing (4), which hub is mounted on the pin (1) constructed as a hollow supporting pin, and is axially fixed by an axial bracing of the supporting bearings (16, 17) with respect to the pin (1), and in which the pin (1) is provided with an internal toothing (30) and the sleeve (9) is provided with an external toothing (31), characterized in that the toothed disc (10), which is constructed in the form of a ring, is greater in external diameter than the external diameter of the free end of the pin (1) and the part of the toothed disc (10) projecting beyond the pin (1) rests on the pin side on the front face of the inner ring (34) of one of the supporting bearings (16).

3. Connection, secure against rotation, according to claim 2, characterized in that the planet cross-piece (5), the toothed disc (10) and the pin (1) have several paraxial bores in alignment with each other (33, 34, 35), distributed on the circumference for fastening screws (11), that the bores (33) of the planet cross-piece (5) are continuous and receive, with play, the heads (32) of the screws (11) in each case, which brace the toothed disc (10) with the pin (1), and that the bores (35) of the pin are tapholes.

(10) avec le tourillon (1), et en ce que les alésages (35) du tourillon sont filetés.

## Revendications

1. Dispositif pour la liaison rigide en rotation d'une traverse planétaire (5) mobile axialement d'un engrenage planétaire (4) avec un tourillon (1), en particulier le tourillon porteur d'une boîte de vitesse hydrostatique de véhicule, dans lequel un manchon (9) à denture droite lié de façon rigide à la traverse planétaire et une denture correspondante (30) s'engrènent à l'extrémité du tourillon pour transmettre un moment d'appui transféré par l'intermédiaire de la traverse planétaire (5), dans lequel la mobilité axiale de la traverse planétaire (5) est limitée dans les deux sens par rapport au tourillon (1), et dans lequel l'une des pièces présente, dans la zone de la denture, une gorge (28) dont le fond atteint au moins celui de la denture, une roue dentée (10) étant agencée dans cette gorge (28) de façon que ses dents soient décalées d'un demi-pas environ par rapport aux dents de la denture de l'autre pièce, caractérisé en ce que la gorge (28) est formée dans le manchon (9) au voisinage immédiat de sa denture (31) et présente un diamètre réduit et est limitée d'un côté, en partie par la face frontale des dents de la denture (31) du manchon, d'un autre côté par la surface frontale de la traverse planétaire (5) et en ce que la roue dentée (10) est fixée, de façon amovible à l'extrémité frontale du tourillon.

2. Dispositif pour la liaison rigide en rotation d'une traverse planétaire mobile axialement avec un tourillon selon la revendication 1, dans un entraînement à engrenages, pourvu d'un moyeu de roue (2) contenant l'engrenage planétaire (4), ledit dispositif étant tourillonné sur le tourillon porteur tubulaire (1) et étant fixé axialement grâce à une tension axiale des roulements de support (16, 17) par rapport au tourillon (1), et dans lequel le tourillon (1) et le manchon (9) sont respectivement pourvus d'une denture intérieure (30) et d'une denture extérieure (31), caractérisé en ce que la roue dentée (10) en forme d'anneau a un diamètre estérieur plus grand que celui de l'extrémité lisse du tourillon (1) et en ce que la partie de la roue dentée (10) dépassant le tourillon (1) se trouve en appui, du côté dudit tourillon, sur la face frontale de la bague intérieure (34) de l'un des roulements de support (16).

3. Dispositif pour la liaison rigide en rotation d'une traverse planétaire mobile axialement avec un tourillon selon la revendication 2, caractérisé en ce que la traverse planétaire (5), la roue dentée (10) et le tourillon (1) comportent plusieurs alésages (33, 34, 35) pour vis des fixation (11), avec des axes parallèles, alignés les uns par rapport aux autres et répartis sur la périphérie, caractérisé en ce que les alésages (33) de la traverse planétaire (5) la traversent et reçoivent, à chaque fois, avec un certain jeu, les têtes (32) des vis (11) qui lient sous tension la roue dentée

Fig.1

Fig.2

Fig.3
(A-A)

Fig.4

0 038 772